# EUROPÄISCHE PATENTANMELDUNG

(11) **EP 0 569 060 A2**
(43) Veröffentlichungstag der Anmeldung: **10.11.1993**
(21) Anmeldenummer: 93200681.0
(22) Anmeldetag: 10.03.1993
(51) Int. Cl.: H04M 1/72, H04Q 7/04

(54) **Aus schnurlosen Telefonen gebildete Nebenstellenanlage**

(30) Priorität: 11.03.1992 DE 4207775
(71) Anmelder: Philips Patentverwaltung GmbH, 22335 Hamburg (DE); Philips Electronics N.V., 5621 BA Eindhoven (NL)
(72) Erfinder: Sondermann, Manfred, c/o Philips Patentverwaltung, W-2000 Hamburg 1 (DE); Kosmann, Erwin, c/o Philips Patentverwaltung GmbH, W-2000 Hamburg 1 (DE); Ranner, Georg, c/o Philips Patentverwaltung GmbH, W-2000 Hamburg 1 (DE)
(74) Vertreter: Volmer, Georg, Dipl.-Ing.

(57) **Zusammenfassung**

Bei bekannten aus schnurlosen Telefonen gebildeten Nebenstellenanlagen mit mindestens einer Basisstation eines schnurlosen Telefons und mindestens einem Handteil eines schnurlosen Telefons, ist zwischen Handteil und Basisstation für Gespräche und den Austausch von Meldungen ein Duplex-Funkkanals für jedes Handteil vorgesehen.

Um den Aufwand bei solchen Nebenstellenanlagen auf ein Mindestmaß zu reduzieren, schlägt die Erfindung vor, daß für alle einer Basisstation zugeordneten Handteile lediglich ein einziger Duplex-Kanal vorgesehen ist. Ohne Änderungen an der Hardware auszuführen, läßt sich auf diese Weise für eine aus schnurlosen Telefonen gebildete Nebenstellenanlage eine Basisstation verwenden, die bisher nur für eine paarweise Zuordnung eines einzigen schnurlosen Telefons geeignet war.

## Beschreibung

Die Erfindung betrifft eine aus schnurlosen Telefonen gebildete Nebenstellenanlage mit mindestens einer Basisstation eines schnurlosen Telefons und mindestens einem Handteil eines schnurlosen Telefons, wobei zwischen Handteil und Basisstation für Gespräche und den Austausch von Meldungen ein Duplex-Funkkanal für jedes Handteil vorgesehen ist.

Aus schnurlosen Telefonen gebildete Nebenstellenanlagen bieten den Vorteil, daß jeder Teilnehmer einer solchen Nebenstellenanlage sich innerhalb des Funkbereiches der Nebenstellenanlage mit dem Handteil seines schnurlosen Telefons frei bewegen kann. Gegenüber einer Nebenstellenvermittlungsanlage, an der lediglich schnurlose Telefone mittels Basisstationen angeschlossen sind, unterscheidet sich eine aus schnurlosen Telefonen gebildete Nebenstellenanlage dadurch, daß Funktionen der Nebenstellenanlage und Funktionen des schnurlosen Telefons zu einer Funktionseinheit zusammengefaßt sind. Hierdurch kann der Aufwand insgesamt verringert werden.

Eine aus schnurlosen Telefonen gebildete Nebenstellenanlage ist beispielsweise aus EP 03 04 998 A2 bekannt. In einer Basisstation, die an einem öffentlichen Telefonnetz angeschlossen ist, ist eine Steuereinrichtung vorgesehen, welche unter anderem auch den Datenaustausch mit der Basisstation Zugeordneten Handteilen steuert. Um eine Fehlverbindung mit der Basisstation nicht zugeordneten Handteilen zu vermeiden, tauschen Basisstationen und Handteile Informationen aus, die eine Kennung enthalten. In den auszutauschenden Informationen ist ferner einer die Handteile unterscheidende Identifikationsnummer vorgesehen. Um den Status eines jeden Handteils zu überwachen, ist ferner eine laufende Statusabfrage durch die Basisstation vorgesehen. Zum Austausch der Informationen und zum Führen der Gespräche kann von jedem Handteil ein Duplex-Funkkanal belegt werden, so daß gleichzeitig mehrere Gespräche über die verschiedenen Handteile, die einer aus schnurlosen Telefonen gebildete Nebenstellenanlage zugeordnet sind, geführt werden können.

Trotz allem ist der technische Aufwand, eine aus schnurlosen Telefonen gebildete Nebenstellenanlage zu realisieren, noch relativ groß. Aufgabe der vorliegenden Erfindung ist es, bei einer aus schnurlosen Telefonen gebildeten Nebenstellenanlage der eingangs genannten Art, den hierzu nötigen Aufwand auf ein Mindestmaß zu reduzieren.

Diese Aufgabe wird dadurch gelöst, daß für alle einer Basisstation zugeordneten Handteile lediglich ein einziger Duplex-Kanal vorgesehen ist. Auf diese Weise werden in der Basisstation anstelle einer Mehrzahl von Sende- und Empfangsstufen lediglich eine einzige Sende- und Empfangsstufe benötigt. Ohne Änderungen an der Hardware auszuführen, läßt sich auf diese Weise für die beanspruchte, aus schnurlosen Telefonen gebildete Nebenstellenanlage eine Basisstation verwenden, die bisher nur für eine paarweise Zuordnung eines einzigen schnurlosen Telefons geeignet war. Lediglich durch Änderungen in der internen Steuerung der Basisstation kann auf diese Weise eine für die beanspruchte, aus schnurlosen Telefonen gebildete Nebenstellenanlage geeignete Basisstation bereitgestellt werden. Dies bringt einen erhebliche Kostenvorteil mit sich, da die Kosten für eine Änderung der Betriebssoftware relativ gering sind im Vergleich zu einer Änderung der Hardware. Auch die Produktion nur eines einzigen Basisteils, das sowohl für eine paarweise herkömmliche Zuordnung von Basisteil und Handteil geeignet ist, als auch für eine aus schnurlosen Telefonen gebildete Nebenstellenanlage, verringert die Produktionskosten. Je nach Verwendungszweck der Basisstation ist nur ein entsprechend dem Verwendungszweck entsprechendes Betriebssystem enthaltener Speicherbaustein vorzusehen.

In einer Ausgestaltung der Erfindung ist im Meldungsverkehr von der Basisstation zu den Handteilen ein erstes Informationssignal dazu vorgesehen, um bei Empfang einer von einem zugeordneten Handteil stammenden bestimmten Rückmeldung den Informationsinhalt dieses ersten Informationssignals zu ändern. In Verbindung mit den für eine Basisstation zuordnenbaren Handteilen und diesen Handteilen Zugeordneten geräteindividualisierenden Kennungen können ohne große Erweiterungen der Meldungslänge zusätzlich Leistungsmerkmale realisiert werden. Eine kurze Meldungslänge ist insbesondere von Vorteil, um an die für eine Rückgewinnung der Meldung benötigte Taktregenerierung nicht allzu hohe Anforderungen stellen zu müssen. Je niedriger die Anforderungen an die Frequenzkonstanz der Taktrückgewinnung sind umso einfachere und kostengünstigere Lösungen eröffnen sich für die Auslegung der Taktrückgewinnung.

In einer weiteren Ausgestaltung ist die Überwachung der Feldstärke auf dem Rückkanal eines ausgewählten Duplex-Kanals vorgesehen. Überschreitet die Feldstärke einen Grenzwert, so ist die Aussendung einer besonderen Meldung vorgesehen. Eine Erhöhung der Feldstärke auf einem Funkkanal wird durch das Einschwingen eines Senders eines Handteils hervorgerufen, das eine Rückmeldung aussenden will. Handteile, die diese erste besondere Meldung erhalten, brechen die Aussendung einer Rückmeldung ab. Auf diese Weise wird eine zeitliche Überlappung von nahezu gleichzeitig eintreffenden Rückmeldungen vermieden.

In einer weiteren Ausgestaltung ist ein zweites Informationssignal zur Synchronisierung der Rufsignale aller Handteile vorgesehen. Der Inhalt dieses Informationssignals kann durch ein Taktsignal, vorzugsweise auch ein über eine öffentliche Telefonleitung ankommendes Rufsignal geändert werden. Handteile, die ihr eigenes Rufsignal in Abhängigkeit vom Informationsgehalt dieses zweiten Informationssignals aussenden, beispielsweise einem Tonruf, sind auf diese Weise untereinander synchronisiert.

Die Erfindung wird nun anhand eines in den Zeichnungen dargestellten Ausführungsbeispiels näher beschrieben und erläutert. Es zeigen
- Figur 1: Organisatorische Einheit einer Basisstation und dieser Basisstation zugeordneten Handteilen
- Figur 2: Aufbau der zwischen Basisstation und Handteilen auszutauschenden Meldungen
- Figur 3: Abfolge der Meldungen auf einem Duplex-Funkkanal bei einem Sammelruf
Im Ausführungsbeispiel wird eine aus schnurlosen Telefonen gebildete Nebenstellenanlage näher beschrieben und erläutert. In der Grundkonfiguration besteht die aus schnurlosen Telefonen gebildete Nebenstellenanlage aus einer Basisstation und einem einzigen Handteil. In dieser Grundkonfiguration kann das Handteil nur als schnurloses Telefon ohne Nebenstellenfunktion betrieben werden. Aber bereits durch Hinzunahme eines zweiten Handteils, ist bereits der Betrieb als Nebenstellenanlage eröffnet.

Die Basisstation ist über eine Amtsleitung mit dem öffentlichen Fernsprechnetz verbunden. Die Handteile und die Feststation identifizieren sich über eine Kennung. Die Kennung besteht im Ausführungsbeispiel aus 20 Bit. Die ersten 17 Bit sind für alle Stationen gleich, die letzten 3 Bit werden als geräteindividualisierender Kennungsteil zur Unterscheidung einzelner Handteile, beispielsweise für einen Selektivruf, benutzt. Im Ausführungsbeispiel ist eine bestimmte Bit-Kombination des geräteindividualisierenden Kennungsteils dafür vorgesehen, einen Sammelruf zu signalisieren, der alle der Basisstation zugeordneten Handteile anspricht. Auf diese Weise sind im Ausführungsbeispiel anhand des geräteindividualisierenden Kennungsteils 2³-1 = 7 Handteile unterscheidbar. Eine Anpassung an eine größere oder kleinere Anzahl von Handteilen ist durch die Länge des geräteindividualisierenden Kennungsteils aber leicht möglich.

Die ersten 17 Bits bilden einen systemindividualisierenden Kennungsteil. Dieser systemindividualisierende Kennungsteil wird bei der Produktion der Basisstation einmalig für nur eine einzige Basisstation vergeben und in jeder Basisstation in einem Festwertspeicher gespeichert. Auf diese Weise können Basisstationen, deren Funkbereiche sich überdecken, eindeutig voneinander unterschieden werden.

Im Ausführungsbeispiel ist vorgesehen, durch Eingabe eines persönlichen Indentifikationscodes über das numerische Tastenfeld des Handteils, das Handteil einer bestimmten Basisstation zuzuordnen. Ferner ist beim Ausführungsbeispiel vorgesehen, dem Handteil durch Eingabe einer Nummer zwischen 1 und 7 den geräteindividualisierenden Kennungsteil durch den Benutzer des Handteils selbst vorgeben zu lassen. Beim Austausch der Kennungen zwischen Basisstation und Handteil ist auf diese Weise die Zuordnung von Basisstation und Handteil sichergestellt.

Obwohl aufgrund des zwischen Basisstation und zugeordneten Handteilen nur einzigen möglichen Duplex-Funkkanal ein Internes Gespräche zwischen den Handteilen nicht möglich ist, können durch geschickte Ausnutzung von Meldungsformaten dennoch eine Reihe von vorteilhaften Leistungsmerkmalen erschlossen werden. Bei dem dargestellten Ausführungsbeispiel können im einzelnen noch beschriebene unterschiedlichen Leistungsmerkmale durch Drücken vorgegebener Tastenkombinationen am Handteil vorgewählt werden. Durch Übermittlung eines einem vorgewählten Leistungsmerkmal zugeordneten Befehlscodes wird das vorgewählte Leistungsmerkmal von dem Handteil zur Basisstation übermittelt und von der Basisstation angefordert. Je nach Anforderung und Status der Basisstation akzeptiert oder weist die Basisstation das angeforderte Leistungsmerkmal ab und schickt eine Rückmeldung zum entsprechenden Handteil zurück. Im Ausführungsbeispiel sind folgende Leistungsmerkmale vorgesehen:
1. Sammelruf
   Über die Amtsleitung ankommende Rufe werden an allen Handteilen signalisiert.
2. Priorisierung
   Nur ein Handteil ist priorisiert, d. h. ankommende Rufe werden nur an dem priorisierten Handteil signalisiert. Es kann immer nur ein Handteil priorisiert werden. Die Priorisierung eines Handteils und Sammelruf sind somit Leistungsmerkmale die sich gegenseitig ausschließen.
3. Rufumleitung
   Eine Rufumleitung kann nur von einem priorisierten Handteil aus aktiviert bzw. deaktiviert werden. Durch die Rufumleitung werden ankommende Rufe, die aufgrund der Priorisierung nur am priorisierten Handteil signalisiert werden würden, an ein anderes Handteil umgeleitet werden, d. h. anstelle des priorisierten Handteils wird der Ruf an einen durch die Anforderung der Rufumleitung benannten Handteil umgeleitet. Bei einer Priorisierung wird jedoch die Rufumleitung nicht mit weitergegeben.
4. Direkte Gesprächsübergabe
   Wurde ein Sammelruf oder ein priorisierter Ruf angenommen, so kann das angenommene Gespräch einem anderen Mobilteil zur Abfrage angeboten werden. Bei der Anforderung des Leistungsmerkmals "Direkte Gesprächsübergabe" wird die Nummer des Handteils angegeben, an welches das Gespräch übergeben werden soll. Die Basisstation erzeugt einen Selektivruf, mit dem das bei der Gesprächsübergabe benannte Handteil gerufen wird. Gleichzeitig wird zur Kontrolle auch an dem Handteil, das das Gespräch übergibt, ein Tonrufsignal erzeugt. Es ist weiterhin vorgesehen, daß wenn nach 30 Sekunden von keinem der beiden Handteile der Ruf angenommen wird, das bis dahin gehaltene Gespräch abgebrochen wird. Zuvor wird jedoch in dem Handteil, von dem die Übergabe ausgeht, 10 Sekunden vor Gesprächsabbruch eine Warntonfolge ausgegeben, die sich von der Ruftonfolge deutlich unterscheidet.
5. Globale Gesprächsübergabe
   Hierbei wird ein Amtsgespräch, welches von einem bestimmten Handteil aus geführt wird, allen anderen Handteilen zur Übernahme angeboten. Ansonsten entspricht dieses Leistungsmerkmal der direkten Gesprächsübergabe.
6. Globale Rufweiterleitung nach Zeit
   Ist dieses Leistungsmerkmal bei einem priorisierten Handteil zusätzlich zur Priorisierung gewählt, so werden alle ankommenden Rufe, die bis dahin nur am priorisierten Handteil signalisiert werden, nach Ablauf einer bestimmten Zeit, beispielsweise 15 Sekunden, auch an allen anderen Handteilen signalisiert.
7. Heranholen eines Rufes
   Von jedem Handteil aus ist es möglich, sich ankommende Rufe signalisieren zu lassen. Das Heranholen eines Rufes hat keinen Einfluß auf die Priorisierung. Dieses Leistungsmerkmal läßt sich auch dann noch aktivieren, wenn bereits ein kommender Ruf an einem anderen Handteil signalisiert wird.

Zur Aktivierung der Leistungsmerkmale bzw. für Rückbestätigung von Leistungsmerkmalen werden entsprechende Befehlscodeworte verwendet. Im Ausführungsbeispiel sind den Befehlscodeworten Bitmuster von systemidentifizierenden Kennungsteilen zugeordnet, die von der Vergabe als Kennungen ausgeschlossen sind. Dies bietet den Vorteil, daß zur Übertragung eines Befehlscodes das Meldungsformat nicht verlängert werden muß, insbesondere bei Befehlen, für die die Übertragung der Kennungsteile nicht erforderlich ist.

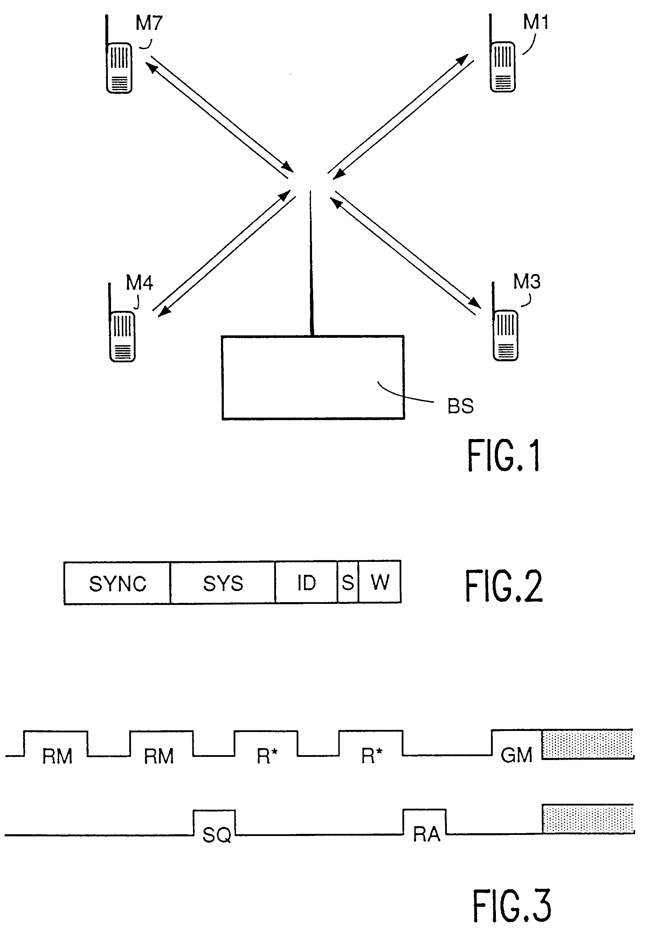

Ein Datenaustausch zwischen Basisstation und Handteilen erfolgt durch Meldungen, die über einen Funkkanal zwischen den Geräten ausgetauscht werden. Figur 2 zeigt den prinzipiellen Aufbau einer Meldung, die zur Kanalbelegung und zur Signalisierung von verschiedenen Zuständen der Vermittlungsanalge benötigt wird. Jede Meldung beginnt einer Synchronisationsfolge SYNC, die eine charakteristische Bitmusterfolge enthält. Darauf folgt der 17 Bit lange systemindividualisierende Kennungsteil SYS und der 3 Bit lange geräteindividualisierende Kennungsteil ID. Des weiteren ist ein erstes Informationssignal im folgenden als Signalisierungsbit S-Bit bezeichnet und ein zweites Signalisierungssignal, im folgenden als Weckerbit W-Bit bezeichnet, vorgesehen. Die Erfindung ist natürlich auf die Reihenfolge der hier beschriebenen Meldungsteile nicht beschränkt. Ebenso wie eine andere Reihenfolge könnte, ohne das Prinzip der Erfindung zu verletzen, vorgesehen sein, die einzelnen Meldungsteile in aufeinander folgenden Meldungen zu senden.

Im folgenden wird der Aufbau einer Verbindung zu einem Handteil M bei einem über das öffentliche Netz ankommenden Ruf beschrieben. Bei einem kommenden Ruf sendet die Basistation BS auf einem als frei erkannten Funkkanal eine Meldung zur Belegung eines Funkkanals. Da die Aufgabe dieser Meldung darin besteht, den Handteilen einen ankommenden Ruf zu signalisieren, wird sie im folgenden als Rufmeldung RM bezeichnet.

Bei einem aktivierten Leistungsmerkmal "Sammelruf" wird in der Rufmeldung der geräteindividualisierende Kennungsteil auf die Bitkombination "000" gesetzt. Bei einem auf diese Weise signalisierten Sammelruf wird jedes der Nebenstellenanlage zugeordnete Handteil angesprochen. Das Signalisierungsbit S ist zunächst zurückgesetzt und das Weckerbit W wird im Wechsel mit einem auf der Amtsleitung detektierten Rufton gesetzt und zurückgesetzt.

Alle Handteile durchsuchen zyklisch die vorgegebenen Funkkanäle auf eine gesendete Rufmeldung. Da der Suchlauf der einzelnen Anteile nicht synchronisiert ist, wird eines der Handteile die Rufmeldung als erste detektieren. Nachdem eine Übereinstimmung zwischen des in der Rufmeldung enthaltenen systemindividualisierenden Kennungsteils SYS und der geräteindividualisierende Kennungsteil als Sammelruf jedes Handteil anspricht, wird durch das rückgesetzte Signalisierungsbit, die Rufmeldung als solche erkannt und als für das Handteil gültige Meldung akzeptiert. Das Handteil setzt nun seinerseits auf dem Rückkanal des gefundenen freien Funkkanals eine im folgenden als Quittungsmeldung SQ bezeichnete Meldung ab. Für die Quittungsmeldung wird die Übertragung eines systemindividualisierenden Kennungsteil oder eines geräteindividualisierenden Kennungsteils nicht benötigt, da dieser Funkkanal ab diesem Zeitpunkt nur von den zugeordneten Handteilen benutzt wird. Da dieser Funkkanal bereits belegt ist, würde eine nicht zugeordnetes Handteil, beispielsweise im Wege eines von dem nicht zugeordneten Handteil ausgehenden Gesprächsaufbauwunsches diesen Funkkanal bei der Suche nach einem freien Funkkanl überspringen.

Erhält die Basisstation eine Quittungsmeldung SQ von einem Handteil, so setzt sie das Signalisierungsbit S-Bit bei den folgenden ausgestrahlten Rufmeldungen R. Anhand des gesetzten Signalisierungsbit S-Bit erkennen die anderen Handteile, daß ein Handteil bereits auf die Rufmeldung geantwortet hat. Hierdurch wird in allen Handteilen die Aussendung weiterer Quittungsmeldungen unterdrückt. Auf diese Weise ist sichergestellt, daß die Funkverbindung zu mindestens einem Handteil der Basisstation zurückgemeldet wird und dennoch der Meldungsverkehr auf dem Rückkanal gering gehalten wird und so eine Überlagerung von Meldungen vermieden wird.

Eine weitere Maßnahme zur Vermeidung von Meldungsüberlagerungen, die zur Folge haben, daß keine der überlagerten Meldungen ausgewertet werden kann, besteht darin, daß die Basisstation vor dem Senden einer Meldung prüft, ob die Feldstärke des Rückkanals einen bestimmten Schwellwert überschreitet. Sollte dies der Fall sein, so ist davon auszugehen, daß ein Handteil in Kürze auf dem Rückkanal eine Signalisierungsmeldung senden wird. Anstelle einer Rufmeldung sendet die Basisstation eine im folgendem als IDLE-Meldung bezeichnete Meldung aus, mit der verhindert wird, daß weitere Handteile eine Quittungsmeldung senden und so eine Überlagerung von Signalisierungsmeldungen entsteht.

Da sich trotz dieses Vorgehens eine Überlagerung von Quittungsmeldungen nicht gänzlich ausschließen läßt, ist zur Vermeidung einer weiteren Überlagerung von Signalisierungsguittungen vorgesehen, daß die Mobilteile ihre Signalisierungsmeldungen nach zufällig ausgewählten Zeitspannen wiederholen. Dadurch kann erreicht werden, daß selbst im ungünstigsten Fall eine Signalisierungsmeldung zur Basisstation zurückgelangt, bevor die Basisstation auf einen anderen Funkkanal zur Aussendung der Rufmeldung wechselt.

Alle Handteile, die Rufmeldungen empfangen, starten ein Tonrufsignal, sobald sie ein gesetztes Weckerbit erkennen. Auf diese Weise ist sichergestellt, daß alle Handteile die Tonrufsignale im gleichen Takt abgeben. Auf diese Weise wird ein entnervendes Durcheinanderrufen der einzelnen Handteile vermieden.

Der ankommende Ruf kann von jedem Handteil, das eine Rufmeldung einer ihm zugeordneten Basisstation empfangen hat, angenommen werden. Bei Betätigung einer Gabelumschalt-Taste durch den Fernsprechteilnehmer wird das Senden einer Rufannahme-Meldung RA ausgelöst. Die Rufannahme-Meldung enthält zu ihrer Kennzeichnung im geräteindividualisierenden Kennungsteil ID die Gerätenummer des Handteils. Die Basisstation, die eine Rufannahme-Meldung RA empfängt, quittiert diese Meldung mit einer Gesprächsübergabe-Meldung GM. Die Gesprächsübergabe-Meldung enthält im geräteindividualisierenden Kennungsteil die in der Rufannahme-Meldung enthaltene Gerätenummer des Handteils. Aufgrund der Gesprächsübergabe-Meldung wird durch den geräteindividualisierenden Kennungsteil nur noch das Handteil angesprochen, von dem aus der Ruf angenommen wurde. Alle anderen Handteile schalten sich aufgrund der nicht übereinstimmenden geräteindividualisierenden Kennungsteile in den Suchlauf zurück.

Nach Erhalt der Gesprächsübergabe-Meldung GM wird die zwischen Basisteil und rufannehmenden Handteil bestehenden Duplex-Funkverbindung zum Führen des Telefongesprächs genutzt. Sollte ein anderer Fernsprechteilnehmer der Nebenstellenanlage an einem anderen Handapparat die Gabelumschalt-Taste drücken, um ein Telefongespräch zu beginnen, so wird auf eine entsprechende Rufmeldung des Handteils die Basisstation nicht antworten, da sie mit der Abwicklung der bestehenden Gesprächsverbindung beschäftigt ist. Da das Handteil keine Rückmeldung von der Basisstation erhält, weist es nach Ablauf einer vorgegebenen Anzahl von Suchläufen den zweiten Fernsprechteilnehmer durch ein Besetzt-Signal ab.

Im folgenden wird die Abfolge der Meldungen bei einem aktivierten Leistungsmerkmal "Priorisierung" näher beschrieben und erläuter. Eine Priorisierung kann im Ausführungsbeispiel von jedem Handteil aus aktiviert werden. Hierzu ist an dem zu priorisierenden Handteil eine bestimmte Tastenkombination, im Ausführungsbeispiel ein hierfür vorgesehene Programmtaste "P" und die Ziffer "9" einzugeben. Nach Eingabe der Ziffer "9" baut das Handteil wie bei einem Geprächsaufbauwunsch, eine Funkverbindung über einen freien Duplex-funkkanal zur Basisstation auf.

Die zur Basisstation geschickte Meldung muß entweder in einer Meldung oder verteilt auf mehrere Meldungen den systemindividualisierenden Kennungsteil enthalten, um die Anforderung des Leistungsmerkmals "Priorisierung" in einer benachbarten Basisstation zu vermeiden. Ferner enthält die Meldung im geräteindividualisierenden Kennungsteil die Gerätenummer des Handteils, von dem aus die Priorisierung angefordert wird. Diese Gerätenummer wird in der Basisstation gespeichert. Bei einem vom öffentlichen Telefonnetz ankommenden Ruf wird nun ein Selektivruf erzeugt, der im geräteindividualisierenden Kennungsteil die Gerätenummer des als priorisiert geltenden Handteils enthält. Auf diese Weise wird im Gegensatz zu einem Sammelruf nur das priorisierte Handteil angesprochen und nur dieses wird auf den Selektivruf antworten.

Beim Leistungsmerkmal "Globale Rufweiterleitung nach Zeit" ist in der Basisstation eine Zeitgeberschaltung vorgesehen, die nach Ablauf einer ersten Zeit, beispielsweise nach 15 Sekunden, den Inhalt des geräteindividualisierenden Kennungsteils auf die Bitkombination "000" ändert. Hierdurch wird also ein Selektivruf nach Ablauf des Zeitgebers in einen Sammelruf umgewandelt. Der Meldungsverkehr, der sich nun ergibt, entspricht voll dem unter den bereits im Leistungsmerkmal "Sammelruf" beschriebenen Meldungsverkehrs.

Beim Leistungsmerkmal "Heranholen eines Rufes" muß der entsprechende Teilnehmer an seinem Telefon im Ausführungsbeispiel die Tastenkombination Programmtaste "P" und "*" eingeben. Bei Auswahl dieses Leistungsmerkmals muß keine Meldung zur Basisstation gesendet werden. Unabhängig davon ob ein Sammelruf oder ein Selektivruf von der Basistation gesendet wird, sendet das heranholende Handteil eine Rufannahmemeldung. Sobald die Basisstation die Rufannahme-Meldung erkannt hat, wird der ankommenden Ruf "abgehoben" und ein Sprechweg zwischen der öffentlichen Telefonleitung auf den Duplex-Funkkanal durchgeschaltet. Mit der Rufannahmemeldung hat das Handteil bereits die benutzten Funkkanäle als Sprechkanäle belegt. Die Sprechverbindung ist vollständig durchgeschalten.

Durch die Durchschaltung des Sprechwegs ist die Basisstation für die anderen Handteile nicht mehr erreichbar. Sollte nun ein anderes Handteil, beispielsweise auch das priorisierte Handteil den Ruf heranholen wollen, so wird wie bereits beschrieben, das Handteil durch einen Besetzt-Ton abgewiesen. Auf diese Weise ist ohne zusätzlichen schaltungstechnischen oder organisatorischen Aufwand die Verwaltung der anderen Handteile möglich.

Im folgenden Beispiel wird die Gesprächsweitergabe eines mit einem Handteil M4 auf eine der bereits beschriebenen Weise zustande gekommenen Gepräches an das Handteil M7 beschrieben. Der Benutzer des Mobilteils drückt hierzu auf der Eingabetastatur seines Handteils zuerst die Programmtaste "P" und dann die numerische Taste "7". Auf dem Funkkanal wird eine Meldung an die Basisstation geschickt, die den Befehlscode für Gesprächsübergabe und die Gerätenummer 7 enthält. Durch die Geprächsweitergabe-Meldung wird der Teilnehmer des öffentlichen Netzes gehalten und gleichzeitig eine Rufmeldung ausgesendet, die als geräteindividualisierenden Kennungsteil die Gerätenummer des Handteils enthält, an welches das Gespräch übergeben werden soll. Als solche Meldung eignet sich in besonderer Weise der bereits beschriebene Selektivruf. Ein neuer Befehl hierfür ist also gar nicht notwendig. Aufgrund des Selektivrufs wird der Tonruf des angesprochenen Handteils aktiviert.

Durch die Auswahl des Leistungsmerkmals Gesprächsweitergabe wird das gesprächsübergebende Handteil in einen Überwachungszustand versetzt. Solange dieser durch eine im gesprächsübergebenden Handteil ausgelöste Zeitgeberschaltung kontrollierte Überwachungszustand besteht, wird durch Empfang einer Rufmeldung die die systemindividualisierende Kennung enthält; das Tonrufsignal des Handteils mit aktiviert.

Nimmt das Handteil, an welches das Gespräch übergeben werden soll, seinen Selektivruf an, so sendet es ein Rufannahmesignal wodurch die Basisstation das Aussenden des Selektivrufs beendet. Mit Ausbleiben des Selektivrufs bleibt auch im gesprächsübergebenden Handteil das Tonrufsignal aus. Hierdurch wird der Benutzer des gesprächsübergebenden Handteils von der Gesprächsannahme des anderen Handteils informiert.

Solange das angesprochene Handteil den Selektivruf nicht annimmt, kann das Gespräch von dem gepsrächsübertragenden Handteil durch Drücken der Tastenkombination "P" und "*" wieder herangeholt werden. Hierzu schickt es einfach eine schon bereits beschrieben Rufannahme-Meldung.

In gleicher Weise ist auch eine globale Gespräschsübergabe möglich. Durch Eingabe der Tastenkombination "P" und "0" wird eine Gesprächsübergabe-Meldung ausgesendet, die als geräteindividualisiernden Kennungsteil die für den Sammelruf geltende Bitkombination "000" enthält. Anstelle eines Selektivrufs wird daraufhin von der Basisstation ein Sammelruf gesendet.

## Patentansprüche

1. Aus schnurlosen Telefonen gebildete Nebenstellenanlage mit mindestens einer Basisstation eines schnurlosen Telefons und mit mindestens einem Handteil eines schnurlosen Telefons, wobei zwischen Handteil und Basisstation für Gespräche und den Austausch von Meldungen ein Duplex-Funkkanal für jedes Handteil vorgesehen ist,
dadurch gekennzeichnet,
daß für alle einer Basisstation zugeordneten Handteile lediglich ein einziger Duplex-Kanal vorgesehen ist.

2. Aus schnurlosen Telefonen gebildete Nebenstellenanlage nach Anspruch 1,
dadurch gekennzeichnet,
daß im Meldungsverkehr von der Basisstation zu den Handteilen ein erstes Informationssignal (S-Bit) dazu vorgesehen ist, um bei Empfang einer von einem zugeordneten Handteil stammenden bestimmten Rückmeldung den Informationsinhalt dieses ersten Informationssignals zu ändern.

3. Aus schnurlosen Telefonen gebildete Nebenstellenanlage nach Anspruch 1 oder 2,
dadurch gekennzeichnet,
daß bei Überschreitung einer bestimmten Feldstärke auf dem Rückkanal des ausgewählten Duplex-Funkkanals die Aussendung einer ersten besonderen Meldung (IDLE-Meldung) vorgesehen ist.

4. Aus schnurlosen Telefonen gebildete Nebenstellenanlage nach Anspruch 1, 2 oder 3,
dadurch gekennzeichnet,
daß ein zweites Informationssignal (W-Bit) zur Synchronisierung der Rufsignale aller Handteilen vorgesehen ist.

5. Basisstation für ein schnurloses Telefon bei dem zur Führung von Gesprächen zwischen Basisstation und Handteil ein Duplex-Funkkanal sowie der Austausch von Kennungen vorgesehen ist,
dadurch gekennzeichnet,
daß Mittel zur Auswertung eines geräteindividuellen Kennungsteils (ID) vorgesehen sind.

6. Basisstation eines schnurlosen Telefons nach Anspruch 5,
dadurch gekennzeichnet,
daß in der Basisstation Mittel zur Aussendung eines ersten Informationssignals (S-Bit) vorgesehen sind, die den Informationsinhalt dieses ersten Informationssignals ändern, wenn eine bestimmte Rückmeldung auf dem Rückkanal des Duplex-Funkkanals empfangen wird.

7. Basisstation eines schnurlosen Telefons nach Anspruch 5 oder 6,
dadurch gekennzeichnet,
daß Mittel zur Überwachung der Feldstärke auf dem Rückkanal vorgesehen sind und bei Überschreitung einer bestimmten Feldstärke die Aussendung einer ersten besonderen Meldung (IDLE-Meldung) vorgesehen ist.

8. Basisstation eines schnurlosen Telefons nach Anspruch 5, 6 oder 7,
dadurch gekennzeichnet,
daß in der Basisstation Mittel zur Aussendung eines zweiten Informationssignal (W-Bit) vorgesehen sind, dessen Informationsinhalt für eine taktweise Änderung vorgesehen ist.

9. Handteil eines schnurlosen Telefons mit Mitteln, die zur Auswertung und Aussendung von Meldungen und in den Meldungen enthaltenen Kennungen vorgesehen sind,
dadurch gekennzeichnet,
daß diese Mittel zur Auswertung eines in den Meldungen enthaltenen ersten Informationssignal (S-Bit) vorgesehen sind und bei einem bestimmten Zustand dieses ersten Informationssignals die Rücksendung einer Meldung vorgesehen ist.

10. Handteil eines schnurlosen Telefons nach Anspruch 9,
dadurch gekennzeichnet,
daß bei Empfang einer besonderen Meldung (IDLE-Meldung) die Unterdrückung einer Rückmeldung vorgesehen ist.

11. Handteil eines schnurlosen Telefons nach Anspruch 9 oder 10,
dadurch gekennzeichnet,
daß bei einem bestimmten Zustand eines zweiten Informationssignals (W-Bit) die Aktivierung eines Rufsignals vorgesehen ist.
